# EUROPÄISCHE PATENTANMELDUNG

(11) **EP 4 227 195 A1**
(43) Veröffentlichungstag der Anmeldung: **16.08.2023**
(21) Anmeldenummer: 22156393.5
(22) Anmeldetag: 11.02.2022
(51) Int. Cl.: B62D 25/00, B62D 29/00

(54) **SYSTEM EINES STRUKTURELEMENTES MIT DARIN ANGEORDNETEM DÄMMELEMENT**

(71) Anmelder: Sika Technology AG, 6340 Baar (CH)
(72) Erfinder: LINDGREN, Henrik, 7181 Feluy (BE)
(74) Vertreter: Sika Patent Attorneys

(57) **Zusammenfassung**

Ein System eines Strukturelementes eines Kraftfahrzeugs mit einem im Strukturelement angeordneten Dämmelement umfasst: ein Strukturelement, welches zwei gefügte Wände umfasst, die auf einem Abschnitt einen Hohlraum mit zumindest zwei offenen Enden bilden, wobei eine erste Wand auf diesem Abschnitt eine Öffnung hat; ein Dämmelement mit einem Träger und ein am Träger angeordnetes expandierbares Material, wobei der Träger eine geschlossene Oberfläche umfasst und zumindest eine über Rippen an dieser geschlossenen Oberfläche befestigte Seitenwand; wobei das Dämmelement derart im Strukturelement angeordnet ist, dass die geschlossene Oberfläche des Trägers die Öffnung der ersten Wand abdeckt, und dass die Seitenwand im Wesentlichen ein offenes Ende des Hohlraumes teilweise verschliesst.

## Beschreibung

Die Erfindung betrifft ein System eines Strukturelementes eines Kraftfahrzeugs mit einem im Strukturelement angeordneten Dämmelement.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das geringe Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmässige Form oder ein enges Ausmass auf, wodurch es erschwert wird, sie richtig abzudichten, zu verstärken und zu dämpfen.

Insbesondere im Automobilbau, aber auch im Flugzeug- und Bootsbau, werden deshalb Abdichtungselemente (Englisch: baffle) verwendet, um Hohlräume abzudichten und/ oder akustisch abzuschotten, oder Verstärkungselemente (Englisch: reinforcer) verwendet, um Hohlräume zu verstärken.

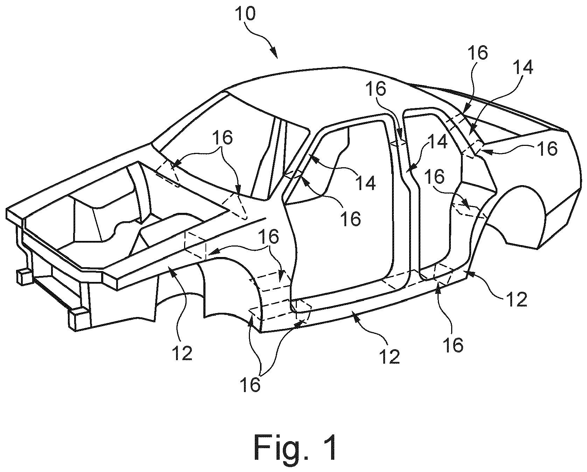

In Fig. 1 ist eine Karosserie eines Automobils schematisch dargestellt. Die Karosserie 10 weist dabei verschiedene Strukturen mit Hohlräumen, wie beispielsweise Säulen 14 und Träger bzw. Verstrebungen 12 auf. Solche Strukturelemente 12, 14 mit Hohlräumen werden üblicherweise mit Abdichtungs- und/oder Verstärkungselementen 16 abgedichtet bzw. verstärkt.

Solche herkömmlichen Abdichtungselemente 16 schliessen typischerweise einen Querschnitt der jeweiligen Strukturelemente 12, 14. Um eine bessere akustische Dämmung zu erreichen, werden in letzter Zeit vermehrt ganze Abschnitte von solchen Strukturelementen 12, 14 ausgeschäumt beziehungsweise abgedichtet. Dieser Trend wird durch den vermehrten Einsatz von elektrischen Fahrzeugen verstärkt, weil bei solchen elektrischen Fahrzeugen eine andere Geräuschkulisse vorliegt als bei herkömmlichen Fahrzeugen mit Verbrennungsmotor, und weil dadurch eine höhere Anforderung an die Geräuschdämmung des Innenraums gestellt wird.

Um diese erhöhten Anforderungen bezüglich der Geräuschdämmung der Fahrzeuge zu befriedigen, werden vermehrt zweikomponentige Polyurethanschäume eingesetzt, mit welchen solche Abschnitte in Strukturelementen ausgeschäumt werden. Nachteilig an dieser Lösung ist es jedoch, dass dafür die Produktionslinien mit teuren Robotern ausgestattet werden müssen, und dass auch ein erhöhter Arbeits- und Materialeinsatz notwendig ist. So müssen beispielsweise Abdichtungselemente eingesetzt werden, um diese zweikomponentigen Schäume in ihrer Ausdehnung zu begrenzen. Weiterhin nachteilig an dieser Lösung ist es, dass solche zweikomponentigen Polyurethanschäume typischerweise Isocyanate enthalten, welche giftig (insbesondere krebserregend) sind und daher unter erhöhter Arbeitssicherheit und erhöhtem Einsatz an Material und Ausrüstung angewendet werden müssen.

Es ist daher eine Aufgabe der vorliegenden Erfindung, Abdichtungslösungen zur Verfügung zu stellen, welche einerseits erhöhte Anforderungen an die akustische Abdämmung erfüllen, und welche andererseits einen geringeren Arbeits- und/oder Kostenaufwand mit sich bringen. Insbesondere soll eine Eignung einer solchen neuen Abdichtungslösung für elektrisch angetriebene Kraftfahrzeuge gegeben sein.

Diese Aufgabe wird zunächst gelöst durch ein System eines Strukturelementes eines Kraftfahrzeugs mit einem im Strukturelement angeordneten Dämmelement, das System umfassend: ein Strukturelement, welches zumindest zwei gefügte Wände umfasst, die auf einem Abschnitt einen Hohlraum mit zumindest zwei offenen Enden bilden, wobei eine erste Wand auf diesem Abschnitt zumindest eine Öffnung hat; ein Dämmelement, umfassend einen Träger und ein am Träger angeordnetes expandierbares Material, wobei der Träger eine geschlossene Oberfläche umfasst und zumindest eine über Rippen an dieser geschlossenen Oberfläche befestigten Seitenwand, und wobei das expandierbare Material eine Expansionsrate von zumindest 800% hat; wobei das Dämmelement derart im Strukturelement angeordnet ist, dass die geschlossene Oberfläche des Trägers die Öffnung der ersten Wand in einer Draufsicht auf die Öffnung überlappend abdeckt, und dass die zumindest eine Seitenwand im Wesentlichen in einer Ebene eines Querschnittes in einem Bereich eines offenen Endes des Hohlraumes angeordnet ist und dadurch den Querschnitt des Hohlraumes im Bereich des offenen Endes zu zumindest 50% verschliesst.

Diese Lösung hat den Vorteil, dass dadurch mit einem einzigen Bauteil eine Vielzahl von Funktionen erfüllt werden kann. Einerseits kann durch dieses Bauteil eine grossvolumige Ausschäumung eines Abschnittes des Strukturelementes erzielt werden, womit eine sehr hohe akustische Dämmleistung erzielt werden kann. Andererseits kann mit so einem Bauteil eine gezielte Ausschäumung innerhalb dieses Abschnittes gewährleistet werden. Insbesondere durch das Vorsehen der geschlossenen Oberfläche als Bestandteil des Trägers können gewisse Bereiche des Hohlraumes abgeschirmt werden und von expandiertem Material freigehalten werden. Bei einer Verwendung von zweikomponentigen Schäumen ist dies nicht beziehungsweise nur schwer möglich. Dann müssen nämlich zur Abschirmung einzelner Bereiche, wie beispielsweise Öffnungen in Wänden des Strukturelementes, zusätzliche Elemente eingesetzt werden, welche nach einer Schäumung wieder entfernt werden müssen. Dies bedingt dann einen erhöhten Material- und Arbeitseinsatz.

Ein weiterer Vorteil der hier vorgeschlagenen Lösung besteht darin, dass dadurch eine vergleichbare und/oder bessere akustische Abdämmung erzielt werden kann wie durch zweikomponentige Polyurethanschäume, dass aber durch die Verwendung von Bafflen eine deutlich vereinfachte Handhabung und Applikation des Dämmsystems gegeben ist. Diese vorgeschlagenen Dämmelemente können bereits vor einer Tauchlackierung der Karosserie in den Strukturelementen angebracht werden, wobei sie nach der Lackierung im Einbrennofen expandiert werden. Bei zweikomponentigen Polyurethanschäumen ist sowohl eine Anwendung wie auch die Voraussetzung an die Ausrüstung deutlich komplexer und aufwändiger.

Zudem haben die zweikomponentigen Schäume den Nachteil, dass die auszuschäumenden Räume durch geeignete Blocker abgegrenzt werden müssen. Dies bedingt wiederum einen höheren Montage- und Arbeitsaufwand.

Die hier vorgeschlagene Lösung bietet insbesondere den Vorteil, dass eine besonders gute akustische Dämmleistung für Luftschallwellen in einem Frequenzbereich zwischen 500 und 3000 Hz erzielt werden kann. Da dieser Frequenzbereich insbesondere bei elektrisch betriebenen Kraftfahrzeugen gehäuft auftritt, eignet sich die hier vorgeschlagene Lösung besonders für Anwendungen in Fahrzeugen mit alternativen Antriebssystemen.

Die Bezeichnung "Dämmelement" bzw. "Dämmung" bzw. "gedämmt" umfasst im Zusammenhang mit dieser Erfindung Elemente bzw. Strukturen bzw. Verfahrensschritte zur Abschottung und/oder Verschliessung und/oder Dämmung eines Strukturelementes. Diese verschiedenen Eigenschaften eines solchen Dämmelementes können dabei einzeln oder aber in Kombination miteinander auftreten.

In einer beispielhaften Ausführungsform ist das System in einem Kraftfahrzeug mit elektrischem Antrieb, insbesondere in einem Kraftfahrzeug ohne Verbrennungsmotor.

In einer beispielhaften Ausführungsform deckt die geschlossene Oberfläche, in Draufsicht auf die Öffnung, eine Fläche ab, welche zumindest 300% einer Fläche der Öffnung beträgt. In einer bevorzugten Weiterbildung beträgt die Fläche der geschlossenen Oberfläche zumindest 400% oder zumindest 600% oder zumindest 800% der Fläche der Öffnung.

Eine solche Ausbildung der geschlossenen Oberfläche des Trägers hat den Vorteil, dass dadurch ein Bereich einer Öffnung der Wand des Strukturelementes freigehalten werden kann von expandiertem Material, so dass diese Öffnung für den vorgesehenen Montagezweck funktional bleibt. Dabei müssen neben der korrekten Anordnung des Dämmelementes keine weiteren Vorkehrungen getroffen werden.

In einer beispielhaften Ausführungsform ist die geschlossene Oberfläche kuppelförmig über der Öffnung gewölbt.

In einer beispielhaften Weiterbildung ist ein Randbereich der geschlossenen Oberfläche weniger als 5 mm von der ersten Wand beabstandet.

Das Ausbilden einer solchen Wölbung der geschlossenen Oberfläche hat den Vorteil, dass dadurch eine Zuschäumung der Öffnung der Wand des Strukturelementes zuverlässig verhindert werden kann, indem eine schirmartige Abdeckung der Öffnung vorgesehen ist.

Weiterhin hat eine solche Wölbung der geschlossenen Oberfläche den Vorteil, dass dadurch ein Raum freigehalten wird, welcher für einen vorgesehenen Montagezweck erforderlich ist. Beispielsweise haben Clips, welche oftmals in solche Öffnungen eingeführt werden, eine bestimmte Aufbauhöhe, welche einen solchen freien Raum erfordert.

In einer beispielhaften Ausführungsform verschliesst die zumindest eine Seitenwand jeweils den Querschnitt in einem Bereich eines offenen Endes des Hohlraums zu zumindest 60% oder zu zumindest 70% oder zu zumindest 80%.

Ein solches Mass an Verschliessung der Querschnitte der offenen Enden des Hohlraums hat den Vorteil, dass dadurch einerseits eine Expansion des expandierbaren Materials zuverlässig an einem vorgesehenen Ort gestoppt werden kann, während andererseits genügend offener Querschnitt gegeben ist, um eine Zirkulation von Beschichtungsflüssigkeiten zu gewährleisten.

In einer beispielhaften Ausführungsform hat der Träger zwei Seitenwände, welche zumindest 100 mm voneinander beabstandet sind. In einer beispielhaften Weiterbildung sind die beiden Seitenwände zumindest 120 mm oder 150 mm voneinander beabstandet.

Eine solche Ausgestaltung des Trägers hat den Vorteil, dass dadurch ein grösserer Abschnitt des Strukturelementes ausgeschäumt beziehungsweise abgedämmt werden kann, als dies mit herkömmlichen Dämmelementen der Fall ist.

In einer beispielhaften Ausführungsform hat der Träger zwei Seitenwände, welche in einem Winkel zwischen 30° und 150° zueinander angeordnet sind. In einer beispielhaften Weiterbildung sind die beiden Seitenwände in einem Winkel zwischen 60° und 120° zueinander angeordnet.

Eine solche Anordnung der Seitenwände hat den Vorteil, dass dadurch auch Abschnitte von Strukturelementen wirkungsvoll abgedämmt werden können, welche keine längliche Form aufweisen, sondern eine bogenförmige oder auch T-förmige Form haben.

In einer beispielhaften Ausführungsform hat der Träger zumindest zwei Seitenwände, wobei die geschlossene Oberfläche des Trägers im Wesentlichen zwischen den Seitenwänden angeordnet ist.

In einer beispielhaften Ausführungsform beträgt ein Abstand zwischen jeweils einer Seitenwand und der geschlossenen Oberfläche zumindest 20 mm, so dass durch eine Expansion des expandierten Materials eine zumindest 20 mm dicke Schicht des expandierten Materials auf der jeweiligen Seitenwand gebildet werden kann.

In einer beispielhaften Weiterbildung beträgt dieser Abstand zumindest 30 mm oder zumindest 40 mm oder zumindest 50 mm.

Solche Beabstandungen zwischen der Seitenwand und der geschlossenen Oberfläche des Trägers haben den Vorteil, dass dadurch eine entsprechend dicke Schicht von expandiertem Material auf den Seitenwänden gebildet werden kann, so dass eine hohe akustische Dämmungsleistung erzielt werden kann. In Versuchen hat sich gezeigt, dass insbesondere die Kombination aus Seitenwand des Trägers mit dicker Schicht von expandiertem Material eine besonders hohe akustische Dämmungswirkung erzielt.

In einer beispielhaften Ausführungsform hat das expandierbare Material eine Expansionsrate von zumindest 2000%, bevorzugt von zumindest 2500%, besonders bevorzugt von zumindest 3000%.

Das Vorsehen eines expandierbaren Materials mit besonders hohen Expansionsraten hat den Vorteil, dass dadurch leichtere Dämmelemente verwendet werden können. Da bei der hier vorgeschlagenen Lösung ein grosses Volumen mit expandierbarem Material ausgeschäumt werden soll, ist dieser Aspekt von besonderer Bedeutung.

In einer beispielhaften Ausführungsform ist in einem Bereich der Öffnung kein expandierbares Material auf der der Öffnung zugewandten Seite der geschlossenen Oberfläche angeordnet.

Eine solche Anordnung hat den Vorteil, dass dadurch die Öffnung in der Wand des Strukturelementes freigehalten werden kann von expandiertem Material.

In einer beispielhaften Ausführungsform ist auf einer der Öffnung abgewandten Seite des Trägers mehr expandierbares Material angeordnet als auf einer der Öffnung zugewandten Seite des Trägers.

Dies hat den Vorteil, dass dadurch eine gezielte Ausschäumung des Abschnittes erreicht werden kann, wobei gewisse Bereiche des Hohlraums gegen eine Ausschäumung abgeschirmt sind.

In einer beispielhaften Ausführungsform ist das expandierbare Material derart angeordnet und dimensioniert, dass ein Bereich zwischen der geschlossenen Oberfläche und der zweiten Wand nach einer Expansion vollständig mit expandiertem Material ausgefüllt ist.

Dies hat den Vorteil, dass dadurch wiederum eine akustische Dämmleistung erhöht werden kann.

In einer beispielhaften Ausführungsform ist eine Seitenwand jeweils durch zwei bis sechs Rippen mit der geschlossenen Oberfläche verbunden.

Das Vorsehen von einer geringen Anzahl Rippen zwischen den Seitenwänden und der geschlossenen Oberfläche hat den Vorteil, dass dadurch eine möglichst vollständige Ausschäumung dieser Bereiche ermöglicht wird, und dass zudem ein Gewicht des Trägers möglichst gering gehalten werden kann.

In einer beispielhaften Ausführungsform hat der Abschnitt des Strukturelementes eine längliche Form und bildet einen Hohlraum mit zwei offenen Enden.

In einer beispielhaften Weiterbildung hat der Träger dabei zwei Seitenwände, welche jeweils ein offenes Ende des Hohlraumes teilweise verschliessen.

In einer alternativen Ausführungsform hat der Abschnitt des Strukturelementes eine T-förmige Form und bildet einen Hohlraum mit drei offenen Enden.

In einer beispielhaften Weiterbildung hat der Träger dabei drei Seitenwände, welche jeweils ein offenes Ende des Hohlraumes teilweise verschliessen.

In einer beispielhaften Ausführungsform hat der Träger weiterhin ein Befestigungselement zur temporären Fixierung des Dämmelementes am Strukturelement.

In einer beispielhaften Ausführungsform hat das Dämmelement zwei solche Befestigungselemente.

In einer beispielhaften Weiterbildung ist das Befestigungselement oder sind die Befestigungselemente als Clip oder als Pushpin ausgestaltet.

In einer alternativen Ausführungsform ist das Befestigungselement beziehungsweise sind die Befestigungselemente als Schweisslasche oder als Haken oder als Klebestreifen oder als magnetisches Element ausgestaltet.

Als expandierbares Material können grundsätzlich verschiedene Materialien eingesetzt werden, welche zur Schäumung gebracht werden können. Typischerweise wird das expandierbare Material thermisch, durch Feuchtigkeit oder durch elektromagnetische Strahlung zur Expansion gebracht.

Ein solches expandierbares Material weist typischerweise ein chemisches oder ein physikalisches Treibmittel auf. Chemische Treibmittel sind organische oder anorganische Verbindungen, welche sich unter Einfluss von Temperatur, Feuchtigkeit, oder elektromagnetischer Strahlung zersetzen, wobei mindestens eines der Zersetzungsprodukte ein Gas ist. Als physikalische Treibmittel können beispielsweise Verbindungen eingesetzt werden, welche bei Erhöhung der Temperatur in den gasförmigen Aggregatszustand übergehen. Dadurch sind sowohl chemische als auch physikalische Treibmittel in der Lage, Schaumstrukturen in Polymeren zu erzeugen.

Bevorzugt wird das expandierbare Material thermisch geschäumt wobei chemische Treibmittel eingesetzt werden. Als chemische Treibmittel eignen sich beispielsweise Azodicarbonamide, Sulfohydrazide, Hydrogencarbonate oder Carbonate.

Geeignete Treibmittel sind beispielsweise auch kommerziell erhältlich unter dem Handelsnamen Expancel^{®} von der Firma Akzo Nobel, Niederlande, oder unter dem Handelsnamen Celogen^{®} von der Firma Chemtura Corp., USA.

Die für die Schäumung erforderliche Wärme kann durch externe oder durch interne Wärmequellen, wie einer exothermen chemischen Reaktion, eingebracht werden. Das schäumbare Material ist vorzugsweise bei einer Temperatur von ≤ 250°C, insbesondere von 100°C bis 250°C, bevorzugt von 120°C bis 240°C, bevorzugt von 130°C bis 230°C schäumbar.

Als expandierbare Materialien geeignet sind beispielsweise einkomponentige bei Raumtemperatur nicht fliessende Epoxidharzsysteme, welche insbesondere eine erhöhte Schlagzähigkeit aufweisen und Thixotropiermittel wie Aerosile oder Nanoclays enthalten. Beispielsweise weisen derartige Epoxidharzsysteme 20 bis 50 Gew.-% eines Epoxid-Füssigharzes, 0 bis 30 Gew.-% eines Epoxid-Festharzes, 5 bis 30 Gew.-% Zähigkeitsmodifikatoren, 1 bis 5 Gew.-% physikalische oder chemische Triebmittel, 10 bis 40 Gew.-% Füllstoffe, 1 bis 10 Gew.-% Thixotropiermittel und 2 bis 10 Gew.-% hitzeaktivierbare Härter auf. Als Zähigkeitsmodifikatoren eignen sich reaktive Flüssigkautschuke auf Basis von Nitrilkautschuk oder Derivate von Polyetherpolyol-Polyurethanen, Core-Shell Polymere und ähnliche dem Fachmann bekannte Systeme.

Ebenfalls geeignete expandierbare Materialien sind Treibmittel enthaltende einkomponentige Polyurethanzusammensetzungen, aufgebaut aus kristallinen, OH-Gruppen aufweisenden Polyestern im Gemisch mit weiteren Polyolen, vorzugsweise Polyetherpolyolen, und Polyisocyanaten mit blockierten Isocyanatgruppen. Der Schmelzpunkt des kristallinen Polyesters sollte ≥ 50 °C sein. Die Isocyanatgruppen des Polyisocyanats können beispielsweise mit Nucleophilen wie Caprolactam, Phenolen oder Benzoxalonen blockiert sein. Weiterhin eignen sich blockierte Polysocyanate wie sie beispielsweise in der Pulverlacktechnologie zum Einsatz kommen und beispielsweise unter den Handelsnamen Vestagon^{®} BF 1350 und Vestagon^{®} BF 1540 kommerziell erhältlich sind von Degussa GmbH, Deutschland. Als Isocyanate sind ebenfalls so genannte verkapselte oder oberflächendeaktivierte Polyisocyanate, welche dem Fachmann bekannt und beispielsweise beschrieben sind in EP 0 204 970.

Weiterhin eignen sich als expandierbare Materialien Treibmittel enthaltende zweikomponentige Epoxid/Polyurethan-Zusammensetzungen, wie sie beispielsweise beschrieben sind in WO 2005/080524 A1.

Weiterhin eignen sich als expandierbare Materialien Treibmittel enthaltende Ethylen-Vinyl-Acetat-Zusammensetzungen.

Ebenfalls geeignete expandierbare Materialien werden beispielsweise unter dem Handelsnamen SikaBaffle^{®} 240, SikaBaffle^{®} 250 oder SikaBaffle^{®} 255 von der Sika Corp., USA, vertrieben und sind in den Patenten US 5,266,133 und US 5,373,027 beschrieben. Solche expandierbaren Materialien sind für die vorliegende Erfindung besonders bevorzugt.

In einer beispielhaften Ausführungsform ist das expandierbare Material als temperaturinduziertes Material ausgebildet.

Dies hat den Vorteil, dass dadurch der Ofen zur Einbrennung der Tauchlackierungsflüssigkeit benutzt werden kann, um das expandierbare Material zu expandieren und um dadurch den Hohlraum zu dämmen. Somit ist kein zusätzlicher Arbeitsschritt notwendig.

Der Träger kann aus beliebigen Materialien bestehen. Bevorzugte Materialien sind Kunststoffe, insbesondere Polyurethane, Polyamide, Polyester und Polyolefine, bevorzugt hochtemperaturbeständige Polymere wie Poly(phenylenether), Polysulfone oder Polyethersulfone; oder beliebige Kombinationen dieser Materialien. Besonders bevorzugt wird Polyamid, insbesondere Polyamid 6, Polyamid 6,6, Polyamid 11, Polyamid 12 oder ein Gemisch davon verwendet.

In einer beispielhaften Ausführungsform sind der Träger und das expandierbare Material als in einem Zweikomponenten-Spritzgussverfahren hergestellt.

In einer alternativen Ausführungsform sind der Träger und das expandierbare Material nicht in einem gemeinsamen Verfahren hergestellt. Beispielsweise kann der Träger in einem Spritzgussverfahren oder in einem dreidimensionalen Druckverfahren hergestellt werden, und das expandierbare Material kann auf den Träger aufextrudiert werden in einem nachgelagerten Produktionsschritt.

In einer weiteren alternativen Ausführungsform umfasst das Dämmelement einen Träger und ein daran angeordnetes Expansionselement. Das Expansionselement umfasst dabei das expandierbare Material. Zudem kann das Expansionselement einen eigenen Träger und ein Kopplungselement zur Verbindung mit dem Träger des Dämmelementes umfassen.

Das Vorsehen von solchen Expansionselementen hat den Vorteil, dass dadurch standardisierte Expansionselemente verwendet werden können, welche je nach Bedarf mit verschiedenen Trägern zur Bildung verschiedener Dämmelemente verwendet werden können. So kann beispielsweise in einem Fall ein Träger mit einer ersten Form mit zwei Expansionselementen kombiniert werden zur Bildung eines Dämmelementes, und in einem zweiten Fall kann ein Träger mit einer zweiten Formgebung mit vier Expansionselementen kombiniert werden zur Bildung eines anderen Dämmelementes.

Einzelheiten und Vorteile der Erfindung werden im Folgenden anhand von Ausführungsbeispielen und mit Bezug auf schematische Zeichnungen beschrieben. Es zeigen:
- Fig. 1: eine beispielhafte Darstellung einer Karosserie;
- Fig. 2a bis 2c: eine beispielhafte Darstellung eines Abschnittes eines Strukturelementes beziehungsweise eines Hohlraumes des Strukturelementes;
- Fig. 3a und 3b: eine beispielhafte Darstellung eines Dämmelementes;
- Fig. 4a und 4b: eine beispielhafte Darstellung eines Dämmelementes;
- Fig. 5a bis 5c: eine beispielhafte Darstellung eines Dämmelementes;
- Fig. 6a bis 6c: eine beispielhafte Darstellung einer Seitenwand;
- Fig. 7a und 7b: eine beispielhafte Darstellung eines Dämmelementes in einem Strukturelement in nicht expandiertem Zustand; und
- Fig. 8a und 8b: eine beispielhafte Darstellung eines Dämmelementes in einem Strukturelement in expandiertem Zustand.

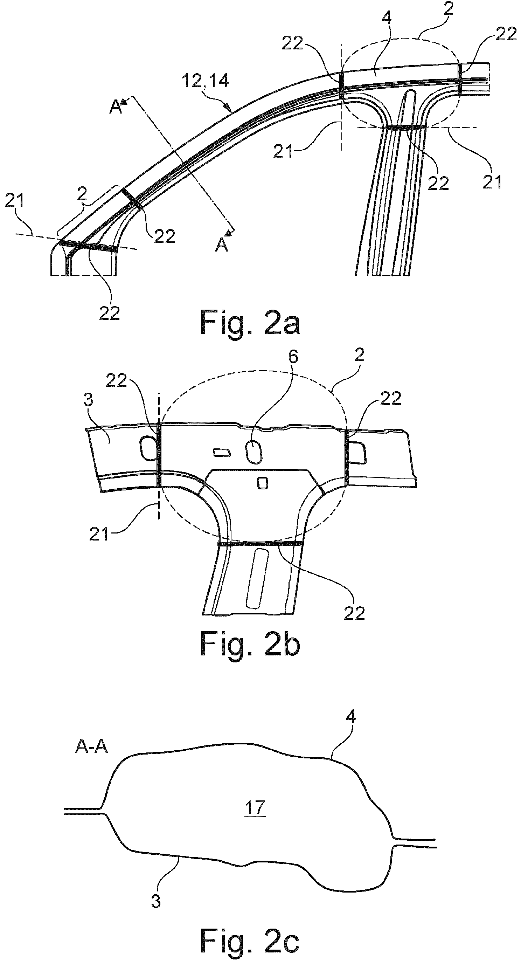

In den Fig. 2a bis 2c ist jeweils ein Ausschnitt eines Strukturelementes 12, 14 dargestellt. In Fig. 2a sind im Strukturelement 12, 14 zwei Abschnitte 2 eingezeichnet, welche typischerweise mit Dämmelementen abgedämmt werden. Einer dieser Abschnitte 2 hat dabei eine längliche Form und zwei offene Enden 22, und der andere dieser Abschnitte 2 hat eine T-förmige Form und drei offene Enden 22.

In dieser Aussenansicht des Strukturelementes 12, 14 ist lediglich die zweite Wand 4 sichtbar, welche in diesem Ausführungsbeispiel einer äusseren Wand des Strukturelementes 12, 14 entspricht.

In Fig. 2b ist der T-förmige Abschnitt 2 aus Fig. 2a näher dargestellt. Im Unterschied zur Fig. 2a ist in Fig. 2b nur die erste Wand 3 des Strukturelementes 12, 14 gezeigt. Diese erste Wand 3 hat eine Öffnung 6.

In Fig. 2c ist schliesslich eine Querschnittsdarstellung des Strukturelementes 12, 14 gezeigt, wobei der Querschnitt aus der Fig. 2a entlang der Linie A-A dargestellt ist. Das Strukturelement 12, 14 hat eine erste Wand 3 und eine zweite Wand 4, welche miteinander gefügt sind und welche den Hohlraum 17 bilden.

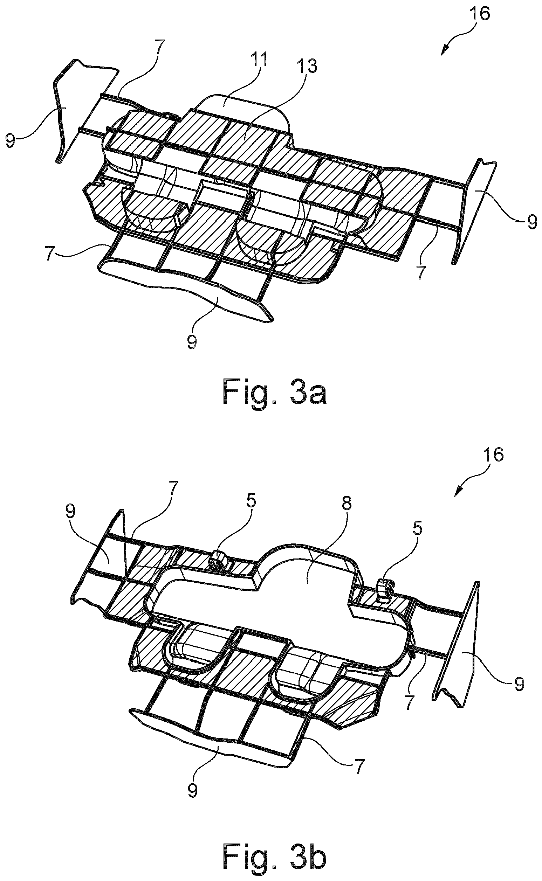

In den Fig. 3a und 3b ist ein erstes Ausführungsbeispiel eines Dämmelementes 16 gezeigt. Das Dämmelement 16 hat einen Träger 11 und auf dem Träger 11 angeordnetes expandierbares Material 13. Der Träger 11 umfasst eine geschlossene Oberfläche 8 und drei über Rippen 7 an dieser geschlossenen Oberfläche 8 befestigte Seitenwände 9. Zudem umfasst der Träger 11 zwei Befestigungselemente 5. In Fig. 3a ist das Dämmelement 16 von einer ersten Seite gezeigt, und in Fig. 3b ist das gleiche Dämmelement 16 von einer zweiten Seite her gezeigt.

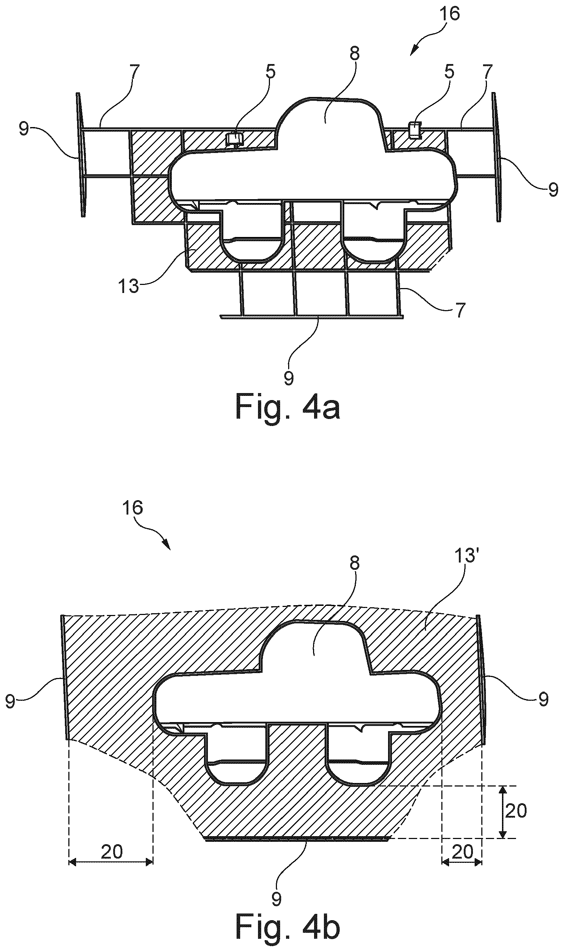

In den Fig. 4a und 4b ist wiederum das gleiche Dämmelement 16 wie in den Fig. 3a und 3b schematisch dargestellt. Dabei ist das Dämmelement 16 in Fig. 4a in einem Zustand vor einer Expansion des expandierbaren Materials 13 dargestellt, und in Fig. 4b ist dasselbe Dämmelement 16 nach einer Expansion des expandierbaren Materials 13 dargestellt, so dass das expandierte Material 13' sichtbar ist.

In diesem Ausführungsbeispiel ist der gesamte Bereich zwischen den Seitenwänden 9 und der geschlossenen Fläche 8 mit expandiertem Material 13' ausgefüllt. Dabei bezeichnet die Distanz 20 einen Abstand zwischen jeweils einer Seitenwand 9 und der geschlossenen Fläche 8. In Versuchen hat sich gezeigt, dass grössere Distanzen 20 zu einer besseren akustischen Dämmungsleistung führen als kleinere Distanzen 20, sofern der Bereich zwischen den Seitenwänden 9 und der geschlossenen Fläche 8 im Wesentlichen mit expandiertem Material 13' ausgefüllt wird.

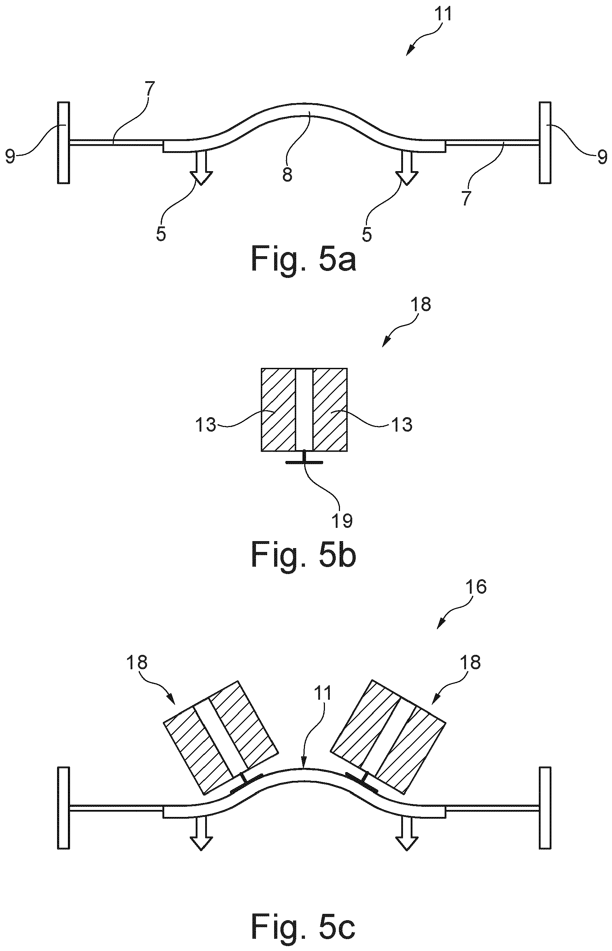

In den Fig. 5a bis 5c ist eine alternative Ausführungsform eines Dämmelementes 16 dargestellt. Dabei ist in Fig. 5a lediglich der Träger 11 dargestellt, und in Fig. 5b ist lediglich ein Expansionselement 18 dargestellt. Träger 11 und Expansionselement 18 zusammen bilden das Dämmelement 16, wie aus der Fig. 5c ersichtlich.

Der Träger 11 umfasst wiederum eine geschlossene Fläche 8, Befestigungselemente 5 und Seitenwände 9, welche über Rippen 7 an der geschlossenen Fläche 8 befestigt sind.

Das Expansionselement 18 umfasst das expandierbare Material 13. In diesem Ausführungsbeispiel ist das Expansionselement 18 zudem mit einem eigenen Träger ausgestattet sowie mit einem Kopplungselement 19 zur Kopplung des Expansionselementes 18 mit dem Träger 11.

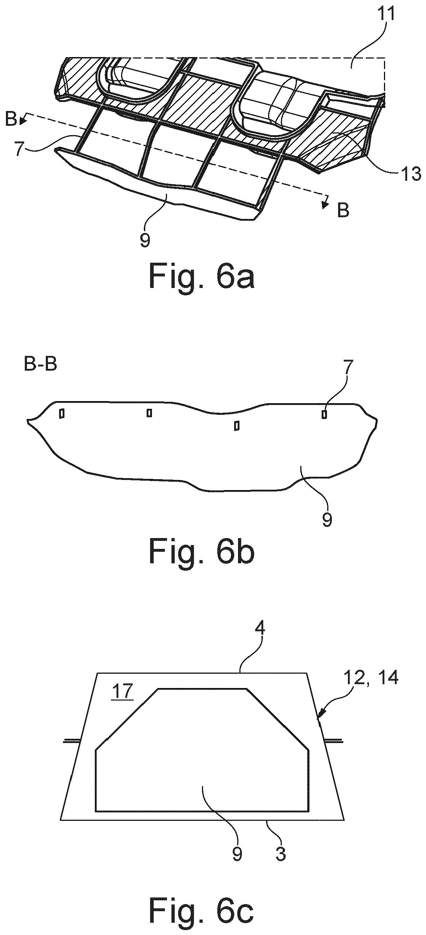

In den Fig. 6a bis 6c ist schematisch und beispielhaft eine Seitenwand 9 des Dämmelementes 16 näher dargestellt. Dabei zeigt Fig. 6a einen Ausschnitt aus dem gesamten Dämmelement, und Fig. 6b zeigt eine Ansicht der Seitenwand 9 gemäss dem Schnitt B-B aus Fig. 6a. In Fig. 6b sind dabei die Seitenwand 9 selbst und die Rippen 7 ersichtlich.

Schliesslich zeigt Fig. 6c schematisch einen beispielhaften Querschnitt entlang einer Ebene in einem Bereich eines offenen Endes des Hohlraums 17. Das Strukturelement 12, 14 umfasst wiederum die erste Wand 3 und die zweite Wand 4, welche an Fügestellen miteinander gefügt sind. Die Wände 3, 4 bilden dabei den Hohlraum 17. Die Seitenwand 9 ist nun im Wesentlichen in dieser Ebene des Querschnittes im Bereich des offenen Endes des Hohlraums 17 angeordnet, so dass der Querschnitt des Hohlraumes 17 zu mehr als 50% durch die Seitenwand 9 verschlossen ist.

Es hat sich gezeigt, dass eine solche Verschliessung des offenen Endes des Hohlraumes 17 durch die Seitenwand 9 ausreicht, um eine Expansion des expandierbaren Materials 13 gezielt zu stoppen.

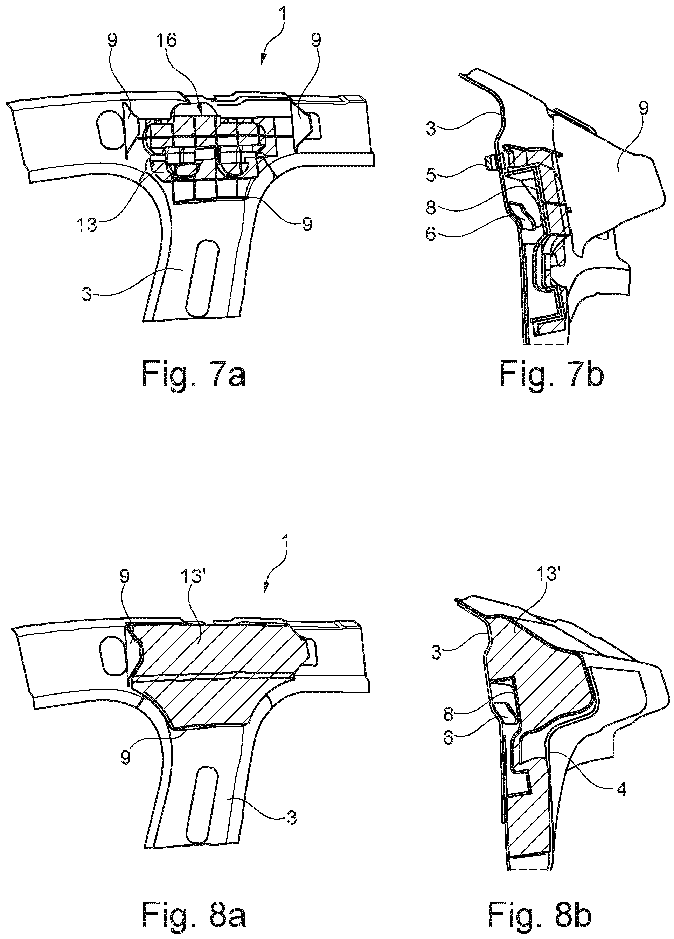

In den Fig. 7a bis 8b sind schliesslich Systeme 1 beziehungsweise Ausschnitte aus diesen Systemen 1 schematisch dargestellt. Dabei befindet sich in den Fig. 7a und 7b das expandierbare Material 13 in nicht expandiertem Zustand, und in den Fig. 8a und 8b befindet sich das expandierbare Material 13 in expandiertem Zustand, so dass das expandierte Material 13' dargestellt ist.

In den Fig. 7b und 8b ist ersichtlich, dass die geschlossene Oberfläche 8 des Trägers 11 die Öffnung 6 in der Wand 3 wirkungsvoll gegen das expandierte Material 13' abschirmt. Somit bleibt die Öffnung 6 frei für einen vorgesehenen Montagezweck.

Weiterhin zeigt die Fig. 8b, dass ein Bereich des Hohlraums 17 zwischen der geschlossenen Oberfläche 8 und der zweiten Wand 4 vollständig mit expandiertem Material 13 ausgefüllt werden kann. Dies führt zu einer besseren akustischen Dämmungswirkung.

### Bezugszeichenliste

- 1: System
- 2: Abschnitt
- 3: erste Wand
- 4: zweite Wand
- 5: Befestigungselement
- 6: Öffnung
- 7: Rippe
- 8: geschlossene Oberfläche
- 9: Seitenwand
- 10: Karosserie
- 11: Träger
- 12: Strukturelement
- 13: expandierbares Material
- 13': expandiertes Material
- 14: Strukturelement
- 16: Dämmelement
- 17: Hohlraum
- 18: Expansionselement
- 19: Kopplungselement
- 20: Distanz
- 21: Querschnitt
- 22: offenes Ende

## Patentansprüche

1. System (1) eines Strukturelementes (12, 14) eines Kraftfahrzeugs mit einem im Strukturelement angeordneten Dämmelement (16), das System (1) umfassend:
ein Strukturelement (12, 14), welches zumindest zwei gefügte Wände (3, 4) umfasst, die auf einem Abschnitt (2) einen Hohlraum (17) mit zumindest zwei offenen Enden (22) bilden, wobei eine erste Wand (3) auf diesem Abschnitt (2) zumindest eine Öffnung (6); hat
ein Dämmelement (16), umfassend einen Träger (11) und ein am Träger (11) angeordnetes expandierbares Material (13), wobei der Träger (11) eine geschlossene Oberfläche (8) umfasst und zumindest eine über Rippen (7) an dieser geschlossenen Oberfläche (8) befestigte Seitenwand (9), und wobei das expandierbare Material (13) eine Expansionsrate von zumindest 800% hat;
wobei das Dämmelement (16) derart im Strukturelement (12, 14) angeordnet ist, dass die geschlossene Oberfläche (8) des Trägers (11) die Öffnung (6) der ersten Wand (3) in einer Draufsicht auf die Öffnung (6) überlappend abdeckt, und dass die zumindest eine Seitenwand (9) im Wesentlichen in einer Ebene eines Querschnittes (21) in einem Bereich eines offenen Endes (22) des Hohlraumes (17) angeordnet ist und dadurch den Querschnitt des Hohlraumes (17) im Bereich des offenen Endes (22) zu zumindest 50% verschliesst.

2. System (1) nach Anspruch 1, wobei die geschlossene Oberfläche (8) in Draufsicht auf die Öffnung (6) eine Fläche abdeckt, welche zumindest 300% einer Fläche der Öffnung (6) beträgt.

3. System (1) nach einem der vorhergehenden Ansprüche, wobei die geschlossene Oberfläche (8) kuppelförmig über der Öffnung (6) gewölbt ist.

4. System (1) nach einem der vorhergehenden Ansprüche, wobei die zumindest eine Seitenwand (9) den Querschnitt (21) des Hohlraumes (17) im Bereich des offenen Endes (22) zu zumindest 70% verschliesst.

5. System (1) nach einem der vorhergehenden Ansprüche, wobei der Träger (11) zwei Seitenwände (9) hat, welche zumindest 100 mm voneinander beabstandet sind.

6. System (1) nach einem der vorhergehenden Ansprüche, wobei der Träger (11) zwei Seitenwände (9) hat, welche in einem Winkel zwischen 30° und 150° zueinander angeordnet sind.

7. System (1) nach einem der vorhergehenden Ansprüche, wobei der Träger (11) zumindest zwei Seitenwände (9) hat, und wobei die geschlossene Oberfläche (8) des Trägers (11) im Wesentlichen zwischen den Seitenwänden (9) angeordnet ist.

8. System (1) nach einem der vorhergehenden Ansprüche, wobei eine Distanz (20) zwischen jeweils einer Seitenwand (9) und der geschlossenen Oberfläche (8) zumindest 20 mm beträgt, so dass durch eine Expansion des expandierbaren Materials (13) eine zumindest 20 mm dicke Schicht des expandierten Materials (13') auf der Seitenwand (9) gebildet werden kann.

9. System (1) nach einem der vorhergehenden Ansprüche, wobei das expandierbare Material (13) eine Expansionsrate von zumindest 2000% hat.

10. System (1) nach einem der vorhergehenden Ansprüche, wobei in einem Bereich der Öffnung (6) kein expandierbares Material (13) auf der der Öffnung (6) zugewandten Seite der geschlossenen Oberfläche (8) angeordnet ist.

11. System (1) nach einem der vorhergehenden Ansprüche, wobei auf einer der Öffnung (6) abgewandten Seite des Trägers (11) mehr expandierbares Material (13) angeordnet ist als auf einer der Öffnung (6) zugewandten Seite des Trägers (11).

12. System (1) nach einem der vorhergehenden Ansprüche, wobei das expandierbare Material (13) derart angeordnet und dimensioniert ist, dass ein Bereich zwischen der geschlossenen Oberfläche (8) und der zweiten Wand (4) nach einer Expansion vollständig mit expandiertem Material (13') ausgefüllt ist.

13. System (1) nach einem der vorhergehenden Ansprüche, wobei eine Seitenwand (9) jeweils durch zwei bis sechs Rippen (7) mit der geschlossenen Oberfläche (8) verbunden ist.

14. System (1) nach einem der vorhergehenden Ansprüche, wobei der Abschnitt (2) des Strukturelementes (12, 14) eine längliche Form hat und einen Hohlraum (17) mit zwei offenen Enden (22) bildet, und/oder wobei der Träger (11) zwei Seitenwände (9) hat, welche jeweils ein offenes Ende (22) des Hohlraumes (17) teilweise verschliessen.

15. System (1) nach einem der Ansprüche 1 bis 13, wobei der Abschnitt (2) des Strukturelementes (12, 14) eine T-förmige Form hat und einen Hohlraum (17) mit drei offenen Enden (22) bildet, und/oder wobei der Träger (11) drei Seitenwände (9) hat, welche jeweils ein offenes Ende (22) des Hohlraumes (17) teilweise verschliessen.
